# EUROPEAN PATENT SPECIFICATION

(11) **EP 2 903 454 B1**
(45) Date of publication and mention of the grant of the patent: **18.01.2017**
(21) Application number: 13759536.9
(22) Date of filing: 11.09.2013
(51) Int. Cl.: A23L 29/219, A23L 29/256

(54) **GEL FOR PREPARING A FOOD PRODUCT**
GEL ZUR HERSTELLUNG EINES NAHRUNGSMITTELPRODUKTS
GEL POUR LA PRÉPARATION D'UN PRODUIT ALIMENTAIRE

(30) Priority: 05.10.2012 EP 12187359
(43) Date of publication of application: 12.08.2015
(73) Proprietor: Nestec S.A., 1800 Vevey (CH)
(72) Inventor: LAGARRIGUE, Sophie, 78224 Singen (DE); DURBEN, Konca Yasmin, 78462 Konstanz (DE); SCHWÄGERL, Martina, 78315 Radolfzell (DE); HANLE, Christoph, 78224 Singen (DE); TSIOULPAS, Alexandros, CH-8280 Kreuzlingen (CH)
(74) Representative: Dinger, Hansjörg
(86) International application number: PCT/EP2013/068776
(87) International publication number: WO 2014/053288

(56) References cited:
- WO-A1-2004/049822
- WO-A1-2012/097930
- CA-A1- 2 161 713

## Description

The invention relates to a composition in gel form for preparing a food product, to a process for preparing a food product, and to the use of the composition for preparing a food product. In particular, the invention relates to a gel composition comprising carrageenan and un-gelatinised starch for preparing savoury food products such as sauces, gravies, and soups.

Concentrated food products, such as dehydrated gravies and sauces, and bouillon or stock cubes, have been known for many years. Savoury dehydrated products are becoming increasingly unattractive to consumers due to a perception that they are not natural, they have an old fashioned image, and they have an artificial appearance. Some products have a pasty texture, but these are typically fat-based and therefore have a high fat content and consequently a poor health or nutritional profile. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products give usually after dilution and product preparation only limited viscosity in the final product, typically they are used to prepare bouillons. Examples of such products are described in WO2007/068484, WO 2008/151850, WO 2008/151851, WO 2008/151852 and WO 2012/062919.

Those products present the disadvantage that the hydrocolloids used are fully solubilised in the food concentrate to develop the gel texture and cannot therefore give additional thickening after dilution in order to give the consistency typical for a soup or sauce. In a dehydrated soup typically 20 to 50 g/l of starch or flour is used to thicken the dish. Incorporation of such high amounts of starch in those products is a problem as starch might get gelatinised during processing, therefore not providing binding in the final application, and it might negatively affect the formation of the gel texture by dramatically increasing the viscosity.

WO 2012/097930 describes a food concentrate in a gel format comprising 10 to 50% un-gelatinised starch that will develop the viscosity during product preparation. This composition presents the disadvantage that a high amount of polyols (5 to 60%) is used in the composition to get the right gel texture that is otherwise affected by the incorporation of the un-gelatinised starch. Polyols might not be perceived as very natural and attractive by consumers. Furthermore, certain polyols in too high amounts may have not desired side effects with some consumers, such as e.g. a non-desired laxative effect.

WO2004/049822 discloses a shelf stable, fluid and portionable food thickener composition containing xanthan and non-gelatinized starch dispersible in hot/cold liquid with minimal or no lump formation, usable as base for sauce or as thickener/binder in foods.

Another commercial product is based on the use of three hydrocolloids and un-gelatinised starch. This product typically suffer from problems that, when used to make a soup or sauce, the gelling agents are still able to form a gel very quickly during cooling. This re-forming of a gel can lead to an undesirable texture for consumption of the product when the dish is cooling. There is therefore a need for a gelling agent composition which does not gel during normal food consumption times.

Those products might also be difficult to dissolve in cold or hot water without lumps. To improve dissolution, some of those products need a pre-dissolution/heating step at a specific temperature before being added to the final application, thus making the product complicated to use for consumers.

There is a persisting need for a composition for preparing soups, sauces and gravies, which composition has the texture of a gel and develops texture upon dilution and product preparation. The gel-forming composition should be able to set after production and melt during product preparation. The melting temperature should be in a range allowing the composition to melt easily during a standard heating step or to allow dilution of the gel composition in hot water. There is further a need for a gel composition for preparing a food product that is stable during transportation and storage, and shows a low syneresis during storage typically for a few weeks or even up to several months.

The object of the present invention is to improve the state of the art and to provide a gel composition that at least goes part way to overcoming one or more of the above mentioned disadvantages of existing gel compositions or at least provides a useful alternative. Particularly, the objective is to provide a gel composition which: i) further thickens upon use of said gel product during the preparation of a food product for example by heating or dissolution of the gel product in hot water, e.g. at a consumer's home; ii) dissolves easily in hot or cold water; iii) does not readily and quickly reform a gel upon cooling of a prepared sauce or food-dish; and iv) does not make use of chemical substances such as polyols, which may not be favourably perceived by consumers.

The object of the present invention is achieved by the subject matter of the independent claims. The dependent claims further develop the idea of the present invention.

Accordingly, the present invention provides in a first aspect a composition in the form of a gel for preparing a food product, the composition comprising:
i) water in the amount of 20 to 50 % (by weight of the total composition),
ii) flavourings in the amount of 10 to 40 % (by weight of the total composition),
iii) salt in the amount of 3 to 15% (by weight of the total composition),
iv) carrageenan as a gelling agent in the amount of 0.1 to 1.5 % (by weight of the total composition), and
v) un-gelatinised starch in the amount of 10 to 40 % (by weight of the total composition);
wherein the composition does not make use of polyols.

In a second aspect, the invention pertains to a process for preparing a composition in the form of a gel for preparing a food product comprising the steps:
a) mixing carrageenen as a gelling agent in the amount of 0.1 to 1.5 % (by weight of the total composition) in water;
b) heating the mixture to a temperature of at least 70°C, preferably to at least 80°C;
c) adding salt in the amount of 3 to 15 % (by weight of the total composition) and flavourings in the amount of 10 to 40% (by weight of the total composition) and mixing further;
d) pasteurize the mixture of step c) at a temperature of at least 75°C, preferably of at least 80°C;
e) cooling the mixture after pasteurization to a temperature within the range 20°C to 60°C, preferably 25°C to 50°C, more preferably 30°C to 45°C; and
f) adding un-gelatinised starch in the amount of 10 to 40 % (by weight of the total composition) to the mixture of step e) after the cooling, mixing further to form the composition and letting the composition sit and form a gel;
wherein the composition does not make use of polyols.

A third as aspect of the invention is a use of the composition according to the claim 1 for the preparation of a food product.

A still further aspect of the invention is a food product comprising the composition according to claim 1.

It has now been found by the inventors that a simple combination of carrageenan, preferably of iota-carrageenan, with un-gelatinised starch in a composition with water, flavourings and salt has certain desirable and surprising characteristics. It forms a gel, is easily dosed into packaging containers, is easily diluted in water, can be used to prepare a thick sauce, soup or gravy that does not readily re-form a gel on cooling, and delivers a smooth mouth-feel which is ideal for a thick sauce or gravy.

Furthermore, it has been found that even further improved gels can be obtained by combining carrageenan, preferably of iota-carrageenan, with xanthan in a combination with un-gelatinised starch. The gels dissolve even more readily in hot or cold water, and they do not form any lumps during the dissolution process. Furthermore, syneresis of such gels during handling or transportation is even further reduced.

The present invention further pertains to a composition in the form of a gel for preparing a food product, the composition comprising:
i) water in the amount of 20 to 50 % (by weight of the total composition),
ii) flavourings in the amount of 10 to 40 % (by weight of the total composition),
iii) salt in the amount of 3 to 15% (by weight of the total composition),
iv) carrageenan as a gelling agent in the amount of 0.1 to 1.5 % (by weight of the total composition), and
v) un-gelatinised starch in the amount of 10 to 40 % (by weight of the total composition),
wherein the carrageenan is iota-carrageenan and wherein the composition does not make use of polyols.

The term "gel", in the context of this invention, means a solid or semi-solid matrix formed by interaction with one or more polysaccharides and water, which is free standing over a time scale of at least a few minutes and which deforms partially in an elastic way when submitted to a deformation force.

The term "flavourings" in the context of this invention means flavouring agents, taste enhancing ingredients, herbs, spices, vegetables, meat and fish components (in liquid or powder form), lipids, carbohydrates or mixtures thereof, which are suitable for being used in a food product or food concentrate product.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable.

The term "un-gelatinised starch" refers to starch that is in an un-swollen, semi-crystalline state. Due to birefringence, it presents maltese crosses when examined under the microscope with polarized light. During cooking the starch loses the birefringence, starts to absorb water which results in swelling of the starch granules and product thickening. The starch or mixtures of starches are selected among starches that have a rather high gelatinization temperature such as corn starch, chemically modified starches, physically modified starches such as annealed or heat-moisture treated starch, preferably heat-moisture treated potato starch. Flours can also be used as a source of starch.

The term "carrageenan" refers to a family of linear sulfated polysaccharides which are usually extracted from red seaweeds. All carrageenans are high molecular weight polysaccharides made up of repeating galactose units and 3,6 anhydrogalactose, both sulfated and non-sulfated. The units are joined by alternating alpha 1-3 and beta 1-4 glycosidic linkages. Various types of carrageenans exist. Their structures differ in 3,6 anhydrogalactose and ester sulphate content. The main types are kappa, lambda and iota. Iota-carrageenan forms gels in the presence of cations, and therefore its behaviour is strongly dependent on salt content. Gelling temperature increases when salt concentration increases. Carrageenan gels are usually heat reversible, showing a small hysteresis between the gelling and melting temperature. When salt content increases, gelling and melting temperatures can be as high as 90-95 °C making it difficult to dissolve easily in hot water. Iota-carrageenan also shows syneresis in the presence of a high salt content.

As used in the context of this invention, "iota-carrageenan" means any carrageenan or mix of carrageenans having a predominance of iota-carrageenan structural units.

The composition may comprise further ingredients selected from carbohydrates, lipids, or mixtures thereof. The lipids may be provided by oils, creamer, vegetable or animal fats, cream and any traditional ingredients used in the manufacture of savoury food compositions. Carbohydrates may be provided by sugars, starches, flours, maltodextrins, and glucose syrups.

As used in this specification, the words "comprises", "comprising", and similar words, are not to be interpreted in an exclusive or exhaustive sense. In other words, they are intended to mean "including, but not limited to".

In a preferred embodiment, the composition of the invention comprises carrageenan in an amount of 0.2 to 1% by weight of the total composition, and more preferably from 0.25 to 0.75% by weight of the total composition.

In a further embodiment, the composition of the invention comprises the un-gelatinised starch in the range 20 to 35 % by weight of the total composition.

The starch must be un-gelatinised starch and must remain in this state during preparation of the composition. This is so that the thickening function of the starch is preserved until such time as a user or a consumer at home adds hot water to the composition or adds the gel composition to hot water and cooks it for a few minutes. The starch then gelatinises to provide the desired thickening to the sauce or gravy. The un-gelatinised starch used for the preparation of the gel composition can be selected according to a specific gelatinisation/pasting profile so that it can be incorporated into the composition at a temperature below the gelatinising (or swelling) temperature, but above the critical temperature at which the gelling agent carrageenan may form a gel. The preferred un-gelatinised starch of the invention is corn starch or physically modified starch, for example heat-moisture treated potato starch.

The amount of water in the composition is in the range 20 to 50 wt% of the total composition. A more preferred range includes 25 to 40% by weight of the total composition.

In a further preferred embodiment, the composition of the invention further comprises xanthan. Preferably, xanthan is present in the composition of the invention in the amount of 0.05 to 1.5 %, more preferably from 0.1 to 0.4 % (by weight of the total composition).

Surprisingly, the inventors have found that the presence of xanthan improves the quality of the gel composition. Particularly, the presence of xanthan helps to strengthen the gel structure of the composition and reduces even further syneresis which may happen during storage or transportation of the gel composition. Furthermore, gels comprising xanthan dissolve even more readily in hot or cold water, and they do not form any lumps during the dissolution process.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group. Xanthan shows very high compatibility with salts, for example up to 25 %, and provides high elasticity.
Optionally, the composition of the invention may further comprise fat or oil. Fat and oil are standard ingredients in food concentrate compositions and contribute generally to the taste and texture of the gel composition, but also to final food products for which the consumer has made use of the gel composition in its preparation. Preferably, the fat or oil are present in the composition of the invention in the range of 3 to 13 % (by weight of the total composition).

In a still further embodiment, the flavourings are present in the composition of the invention in the range of 15 to 30 % (by weight of the total composition).

In a second aspect, the invention pertains to a process for preparing a composition in the form of a gel for preparing a food product comprising the steps:
a) mixing carrageenen as a gelling agent in the amount of 0.1 to 1.5 % (by weight of the total composition) in water;
b) heating the mixture to a temperature of at least 70°C, preferably to at least 80°C;
c) adding salt in the amount of 3 to 15 % (by weight of the total composition) and flavourings in the amount of 10 to 40% (by weight of the total composition) and mixing further;
d) pasteurize the mixture of step c) at a temperature of at least 75°C, preferably of at least 80°C;
e) cooling the mixture after pasteurization to a temperature within the range 20°C to 60°C, preferably 25°C to 50°C, more preferably 30°C to 45°C; even more preferably 35°C to 40°C, and
f) adding un-gelatinised starch in the amount of 10 to 40 % (by weight of the total composition) to the mixture of step e) after the cooling, mixing further to form the composition and letting the composition sit and form a gel;
wherein the composition does not make use of polyols.

In a preferred embodiment of the process of the invention, carrageenen is selected iota-carrageenan.

In a further preferred embodiment of the process of the invention, the un-gelatinised starch is added in the form of a solid powder or in the form as a slurry of starch in oil. This has the advantage that they are industrially feasible and convenient forms of adding un-gelatinised starch to a composition.

In a still further aspect, the invention relates to a food product comprising the composition of the invention, and wherein the food product is a condiment, seasoning, sauce, soup or gravy.

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined. Further advantages and features of the present invention are apparent from the examples.

### EXAMPLES

The invention is further described with reference to the following examples. It will be appreciated that the invention as claimed is not intended to be limited in any way by these examples.

### Example 1

The general procedure for preparing gel compositions of the invention is as follows:
- prepare a pre-mix of the gelling agents (including carrageenen). Preferably, maltodextrin or glucose syrup can be added to the pre-mix;
- add the pre-mix to water with mixing;
- heat the mix to a temperature of 85 °C for a few minutes;
- add all other ingredients (including the salts and flavourings);
- heat the mix at a temperature of 80°C for at least 6 minutes in order to pasteurize the mix;
- cool the mix to between ca. 45-50°C;
- add un-gelatinised starch to the mixture, either in solid form or as a slurry in oil;
- fill the composition into containers and allow the gel to form and set at room-temperature.

### Example 2

A composition according to the invention was prepared according to the general method as described in Example 1 using the amounts of ingredients in the following table:

| **Ingredient** | **Amount [%]** |
|---|---|
| Water | 33 |
| Salt | 9 |
| un-gelatinised Starch | 23 |
| Oil | 11 |
| Iota-carrageenan | 0.33 |
| Xanthan | 0.20 |
| Other ingredients | up to 100 |

The xanthan was added to the pre-mix together with the Iota-carrageenan; the oil was added to the composition together with the un-gelatinised starch.

### Example 3

A composition according to the invention was prepared according to the general method of Example 1 using the amounts of ingredients as in the following table:

| **Ingredient** | **Amount [%]** |
|---|---|
| Water | 29 |
| Salt | 8 |
| Slurry of starch and oil | Starch 21 |
| | Oil 10 |
| Iota-carrageenan | 0.41 |
| Xanthan | 0.20 |
| Other ingredients | up to 100 |

Starch and oil were premixed to form a slurry before being added to the composition.

### Example 4

A composition according to the invention was prepared according to the general method of Example 1 using the amounts of ingredients in the following table:

| **Ingredient** | **Amount [%]** |
|---|---|
| Water | 35 |
| Salt | 10 |
| Starch | 20 |
| Oil | 2 |
| Iota-carrageenan | 0.40 |
| Xanthan | 0.20 |
| Other ingredients | up to 100 |

### Example 5

Rupture strength of the resulting gels from the Examples 2 to 4 were determined.

The term "rupture strength" is used in reference to gel strength and relates to the deformation force needed to break a gel. The rupture strength of a gel should be at least 20 g, but preferably greater than 35 g, as measured using a Texture Analyser.

Rupture strength was measured using a Texture Analyser TAXT2 (Microstable systems) according to the following conditions:
- load cell: 5 kg.
- Penetration test using a cylindrical probe of 1.27 cm diameter.
- The sample was loaded just after heating into a container of 50 mm diameter, until reaching a height of 55 mm. The sample was allowed to cool and gel at ambient temperature. Before measurement, the sample is placed in a water-bath at 20 °C for temperature equilibration.
- Test conditions: pre-test speed: 1 mm/s, test speed: 0.5 mm/s, post speed: 10 mm/s. Measurement was stopped at 25 mm penetration depth.
- The rupture strength is recorded at the peak of the curve force versus penetration depth.

The resulting products from the Examples 2 to 4 were a gel composition which had a rupture strength of above 40 g which when dissolved in water and heated for 1 min delivered the texture of a sauce. It is also to be mentioned that the prepared sauce maintained its thickened texture during cooling as well without re-jellifying.

As a comparison, comparable products available on the market place manufactured with making use of xanthan, locust bean gum as gelling agent and gellan and starch, but without the use of a carrageenen in combination with an un-gelatinised starch, were tested in parallel to the Examples 2 to 4. It was observed that those comparative products which gave a texture during the cooking process showed already reformation of a gel only minutes after the cooking process. The test samples from the Examples 2 to 4 did not re-jellify during this same period after the cooking process.

## Claims

1. A composition in the form of a gel for preparing a food product, the composition comprising:
i) water in the amount of 20 to 50 % (by weight of the total composition),
ii) flavourings in the amount of 10 to 40 % (by weight of the total composition),
iii) salt in the amount of 3 to 15% (by weight of the total composition),
iv) carrageenan as a gelling agent in the amount of 0.1 to 1.5 % (by weight of the total composition), and
v) un-gelatinised starch in the amount of 10 to 40 % (by weight of the total composition);
wherein the composition does not make use of polyols.

2. The composition according to claim 1, wherein the carrageenan is iota-carrageenan.

3. The composition according to claim 1 or 2, wherein the amount of carrageenan in the composition is in the range 0.2 to 1 %.

4. The composition according to one of the claims 1 to 3, wherein the amount of the un-gelatinised starch in the composition is in the range 20 to 35 %.

5. The composition according to one of the claims 1 to 4, wherein the un-gelatinised starch is corn starch or physically modified potato starch.

6. The composition according to one of the claims 1 to 5, wherein the composition further comprises xanthan.

7. The composition according to claim 6, wherein the xanthan is present in the composition in the amount of 0.05 to 1.5 % (by weight of the total composition).

8. The composition according to one of the claims 1 to 7, wherein the composition further comprises fat or oil.

9. The composition according to claim 8, wherein the amount of fat or oil is in the range 3 to 13 % (by weight of the total composition).

10. The composition according to one of the claims 1 to 9, wherein the amount of flavourings is in the range of 15 to 30 %.

11. A process for preparing a composition in the form of a gel for preparing a food product comprising the steps:
a) mixing carrageenen as a gelling agent in the amount of 0.1 to 1.5 % (by weight of the total composition) in water;
b) heating the mixture to a temperature of at least 70°C, preferably to at least 80°C;
c) adding salt in the amount of 3 to 15 % (by weight of the total composition) and flavourings in the amount of 10 to 40 % (by weight of the total composition) and mixing further;
d) pasteurize the mixture of step c) at a temperature of at least 75°C, preferably of at least 80°C;
e) cooling the mixture after pasteurization to a temperature within the range 20°C to 60°C, preferably 25°C to 50°C, more preferably 30°C to 45°C; and
f) adding un-gelatinised starch in the amount of 10 to 40 % (by weight of the total composition) to the mixture of step e) after the cooling, mixing further to form the composition and letting the composition sit and form a gel;
wherein the composition does not make use of polyols.

12. The process according to claim 11, wherein the un-gelatinised starch is added in the form of a solid powder or as a slurry of starch in oil.

13. A use of the composition according to one of the claims 1 to 10 for the preparation of a food product.

14. A food product comprising the composition according to one of the claims 1 to 10.

15. The food product according to claim 14, wherein the food product is a condiment, seasoning, sauce, soup or gravy.

## Patentansprüche

1. Zusammensetzung in Form eines Gels zur Herstellung eines Nahrungsmittelprodukts, wobei die Zusammensetzung Folgendes umfasst:
i) Wasser in der Menge von 20 bis 50 % (bezogen auf das Gewicht der Gesamtzusammensetzung),
ii) Aromen in der Menge von 10 bis 40 % (bezogen auf das Gewicht der Gesamtzusammensetzung),
iii) Salz in der Menge von 3 bis 15 % (bezogen auf das Gewicht der Gesamtzusammensetzung),
iv) Carrageen als ein Geliermittel in der Menge von 0,1 bis 1,5 % (bezogen auf das Gewicht der Gesamtzusammensetzung) und
v) nicht gelatinisierte Stärke in der Menge von 10 bis 40 % (bezogen auf das Gewicht der Gesamtzusammensetzung);
wobei die Zusammensetzung keine Polyole verwendet.

2. Zusammensetzung nach Anspruch 1, wobei das Carrageen lota-Carrageen ist.

3. Zusammensetzung nach Anspruch 1 oder 2, wobei die Menge an Carrageen in der Zusammensetzung im Bereich von 0,2 bis 1 % liegt.

4. Zusammensetzung nach einem der Ansprüche 1 bis 3, wobei die Menge an nicht gelatinisierter Stärke in der Zusammensetzung im Bereich von 20 bis 35 % liegt.

5. Zusammensetzung nach einem der Ansprüche 1 bis 4, wobei die nicht gelatinisierte Stärke Maisstärke oder physisch modifizierte Kartoffelstärke ist.

6. Zusammensetzung nach einem der Ansprüche 1 bis 5, wobei die Zusammensetzung ferner Xanthan umfasst.

7. Zusammensetzung nach Anspruch 6, wobei das Xanthan in der Zusammensetzung in einer Menge von 0,05 bis 1,5 % (bezogen auf das Gewicht der Gesamtzusammensetzung) vorliegt.

8. Zusammensetzung nach einem der Ansprüche 1 bis 7, wobei die Zusammensetzung ferner Fett oder Öl umfasst.

9. Zusammensetzung nach Anspruch 8, wobei die Menge an Fett oder Öl im Bereich von 3 bis 13 % (bezogen auf das Gewicht der Gesamtzusammensetzung) liegt.

10. Zusammensetzung nach einem der Ansprüche 1 bis 9, wobei die Menge an Aromen im Bereich von 15 bis 30 % liegt.

11. Verfahren zur Herstellung einer Zusammensetzung in Form eines Gels zur Herstellung eines Nahrungsmittelprodukts, das die folgenden Schritte umfasst:
a) Mischen von Carrageen als ein Geliermittel in einer Menge von 0,1 bis 1,5 % (bezogen auf das Gewicht der Gesamtzusammensetzung) in Wasser;
b) Erwärmen des Gemischs auf eine Temperatur von mindestens 70 °C, vorzugsweise von mindestens 80 °C;
c) Hinzufügen von Salz in der Menge von 3 bis 15 % (bezogen auf das Gewicht der Gesamtzusammensetzung) und Aromen in der Menge von 10 bis 40 % (bezogen auf das Gewicht der Gesamtzusammensetzung) und weiteres Mischen;
d) Pasteurisieren der Mischung aus Schritt c) bei einer Temperatur von wenigstens 75 °C, vorzugsweise wenigstens 80 °C;
e) Abkühlen der Mischung nach der Pasteurisierung auf eine Temperatur im Bereich von 20 °C bis 60 °C, vorzugsweise 25 °C bis 50 °C, mehr bevorzugt 30 °C bis 45 °C; und
f) Hinzufügen der nicht gelatinisierten Stärke in der Menge von 10 bis 40 % (bezogen auf das Gewicht der Gesamtzusammensetzung) zu der Mischung aus Schritt e) nach dem Abkühlen, weiteres Mischen, um die Zusammensetzung zu bilden, und Ruhenlassen der Zusammensetzung, um ein Gel zu bilden;
wobei die Zusammensetzung keine Polyole verwendet.

12. Verfahren nach Anspruch 11, wobei die nicht gelatinisierte Stärke in der Form eines festen Pulvers oder dünnen Breis aus Stärke in Öl hinzugefügt wird.

13. Verwendung der Zusammensetzung nach einem der Ansprüche 1 bis 10 zur Zubereitung eines Nahrungsmittelprodukts.

14. Nahrungsmittelprodukt, das die Zusammensetzung nach einem der Ansprüche 1 bis 10 umfasst.

15. Nahrungsmittelprodukt nach Anspruch 14, wobei das Nahrungsmittelprodukt ein Aromat, ein Würzmittel, eine Soße, eine Suppe oder eine Bratensauce ist.

## Revendications

1. Composition sous la forme d'un gel pour la préparation d'un produit alimentaire, la composition comprenant :
i) de l'eau dans la quantité de 20 à 50 % (en poids de la composition totale),
ii) des agents aromatisants dans la quantité de 10 à 40 % (en poids de la composition totale),
iii) du sel dans la quantité de 3 à 15 % (en poids de la composition totale),
iv) du carraghénane en tant qu'agent gélifiant dans la quantité de 0,1 à 1,5 % (en poids de la composition totale), et
v) de l'amidon non gélatinisé dans la quantité de 10 à 40 % (en poids de la composition totale) ;
où la composition ne fait pas usage de polyols.

2. Composition selon la revendication 1, dans laquelle le carraghénane est l'iota-carraghénane.

3. Composition selon la revendication 1 ou 2, dans laquelle la quantité de carraghénane dans la composition est dans la plage de 0,2 à 1 %.

4. Composition selon l'une des revendications 1 à 3, dans laquelle la quantité de l'amidon non gélatinisé dans la composition est dans la plage de 20 à 35 %.

5. Composition selon l'une des revendications 1 à 4, dans laquelle l'amidon non gélatinisé est de l'amidon de maïs ou de l'amidon de pomme de terre physiquement modifié.

6. Composition selon l'une des revendications 1 à 5, où la composition comprend en outre du xanthane.

7. Composition selon la revendication 6, dans laquelle le xanthane est présent dans la composition dans la quantité de 0,05 à 1,5 % (en poids de la composition totale).

8. Composition selon l'une des revendications 1 à 7, où la composition comprend en outre une graisse ou une huile.

9. Composition selon la revendication 8, dans laquelle la quantité de graisse ou d'huile est dans la plage de 3 à 13 % (en poids de la composition totale).

10. Composition selon l'une des revendications 1 à 9, dans laquelle la quantité d'agents aromatisants est dans la plage de 15 à 30 %.

11. Procédé de préparation d'une composition sous la forme d'un gel pour la préparation d'un produit alimentaire comprenant les étapes consistant à :
a) mélanger du carraghénane en tant qu'agent gélifiant dans la quantité de 0,1 à 1,5 % (en poids de la composition totale) dans de l'eau ;
b) chauffer le mélange à une température d'au moins 70 °C, de préférence à au moins 80 °C ;
c) ajouter du sel dans la quantité de 3 à 15 % (en poids de la composition totale) et des agents aromatisants dans la quantité de 10 à 40 % (en poids de la composition totale) et mélanger encore ;
d) pasteuriser le mélange de l'étape c) à une température d'au moins 75 °C, de préférence d'au moins 80 °C ;
e) refroidir le mélange après pasteurisation à une température dans la plage de 20 °C à 60 °C, de préférence 25 °C à 50 °C, plus préférablement 30 °C à 45 °C ; et
f) ajouter de l'amidon non gélatinisé dans la quantité de 10 à 40 % (en poids de la composition totale) au mélange de l'étape e) après le refroidissement, mélanger encore pour former la composition et laisser la composition reposer et former un gel ;
dans lequel la composition ne fait pas usage de polyols.

12. Procédé selon la revendication 11, dans lequel l'amidon non gélatinisé est ajouté sous la forme d'une poudre solide ou en tant que bouillie d'amidon dans de l'huile.

13. Utilisation de la composition selon l'une des revendications 1 à 10 pour la préparation d'un produit alimentaire.

14. Produit alimentaire comprenant la composition selon l'une des revendications 1 à 10.

15. Produit alimentaire selon la revendication 14, où le produit alimentaire est un condiment, un assaisonnement, une sauce, une soupe ou un jus de viande.
